# EUROPEAN PATENT SPECIFICATION

(11) **EP 4 383 783 B1**
(45) Date of publication and mention of the grant of the patent: **17.06.2026**
(21) Application number: 21952805.6
(22) Date of filing: 05.08.2021
(51) Int. Cl.: H04W 16/28, H04B 7/06

(54) **BEAM SETTING METHOD, BEAM SETTING DEVICE, AND PROGRAM**
STRAHLEINSTELLVERFAHREN, STRAHLEINSTELLVORRICHTUNG UND PROGRAMM
PROCÉDÉ DE RÉGLAGE DE FAISCEAU, DISPOSITIF DE RÉGLAGE DE FAISCEAU ET PROGRAMME

(43) Date of publication of application: 12.06.2024
(73) Proprietor: NTT, Inc., Tokyo 100-8116 (JP)
(72) Inventor: IWAKUNI, Tatsuhiko, Musashino-shi, Tokyo 180-8585 (JP); UCHIDA, Daisei, Musashino-shi, Tokyo 180-8585 (JP); ARAI, Takuto, Musashino-shi, Tokyo 180-8585 (JP); WAI, Shuki, Musashino-shi, Tokyo 180-8585 (JP); KITA, Naoki, Musashino-shi, Tokyo 180-8585 (JP); ONIZAWA, Takeshi, Musashino-shi, Tokyo 180-8585 (JP)
(74) Representative: Santarelli
(86) International application number: PCT/JP2021/029164
(87) International publication number: WO 2023/012980

(56) References cited:
- EP-A1- 3 562 053
- WO-A1-2019/038624
- JP-A- 2016 504 804
- JP-A- 2019 004 453
- US-A1- 2015 289 147

## Description

### [Technical Field]

The present invention relates to a beam setting method, a beam setting device (a beam setting apparatus) and a program.

### [Background Art]

As radio communication using millimeter waves and quasi-millimeter waves divided into high frequency bands, there are 3rd Generation Partnership Project (3GPP), 5th Generation (5G), New Radio (NR), IEEE 802.11ad and the like. These radio communication schemes have advantages that a wide band can be secured as compared with the conventional microwave band, and that the linearity is large and interference with other communication is small. For this reason, they have been being put into practical use as means for realizing a large capacity radio (e.g., NPL 1).

A distance attenuation amount of a radio propagation path increases according to the frequency. Therefore, in communication in the millimeter wave band, it is common in a radio station device to form a directional beam (beamforming) and transmit a signal toward the radio station device serving as a communication partner. Similarly, it is common to form a directional beam and receive a signal in the radio station device.

The radio station device selects a beam that maximizes the reception power of the radio station device positioned opposite from among the directional beams that can be formed. The beam selection is performed by a procedure called sector level sweep (SLS), for example, in IEEE802.11ad (e.g., see NPL 2).

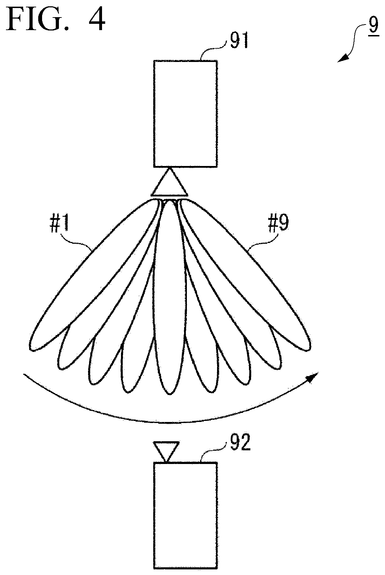

Fig. 4 is a conceptual diagram of a communication system 9 that selects a beam. The communication system 9 includes a first radio station device 91 and a second radio station device 92. The first radio station device 91 is a side (initiator) that transmits communication, and the second radio station device 92 is a side (responder) that receives communication from the first radio station device 91. The first radio station device 91 sequentially transmits signals using formable beams in time division. The sequential transmission of signals performed by the initiator is called a beam sweep. A beam which can be formed by the first radio station device 91 is previously linked to an ID, and shared with the second radio station device 92. The second radio station device 92 receives the signal transmitted from the first radio station device 91 by a beam having the maximum beam width, and measures the reception power thereof. Thereafter, the first radio station device 91 and the second radio station device 92 share the ID of the beam whose reception power becomes maximum, and the first radio station device 91 selects the beam corresponding to the shared ID.

Similarly, even in the 5G NR, a plurality of signal blocks called a synchronization signal/physical broadcast channel (SS/PBCH) are sequentially transmitted in a time-division manner for each beam of the radio base station device, and a beam having the largest reception power of the radio station device positioned opposite is selected.

The second radio station device 92 may perform beam sweep to the first radio station device 91 to select a beam.

### [Citation List]

### [Non Patent Literature]

[NPL 1] Takinami and three others "Standardization Trend and Elemental Technology for Millimeter Wave Band Radio LAN System," IEICE Communication Society Magazine, No. 38, Autumn 2016, p. 100 to 106.
[NPL 2] IEEE, "Part 11: Radio LAN Medium Access Control (MAC) and Physical Layer (PHY) Specifications, Amendment 3: Enhancement for Very High Throughput in the 60 GHz Band" (IEEE Std 802.11ad-2012), 2012/12/28
[NPL 3] T. Nishio, R. Arai, K. Yamamoto and M. Morikura, "Proactive traffic control based on human block prediction RGBD cameras for millimeter-wave communications," 2015 12th Annual IEEE Consumer Communication and Network Conference (CCNC), 2015, PP. 152-153, doi: 10.1109/CCNC.2015.7157963.

EP 3 562 053 A1 discloses a mechanism which enables both efficient beam selection and reduction of power consumption of a terminal apparatus. This mechanism is based on a base station including: a selection unit configured to select a second beam appropriate for communication with a terminal apparatus on a basis of reception results of a plurality of second reference signals transmitted or received using a plurality of the second beams having irradiation ranges obtained by subdividing an irradiation range of a first beam which is appropriate for communication with the terminal apparatus and which is selected on a basis of reception results of a plurality of first reference signals transmitted using a plurality of the first beams which are formed by a plurality of antennas and which are set in advance; and a notification unit configured to notify the terminal apparatus of information indicating arrangement relationship between a plurality of first resources corresponding to a plurality of the first beams for the first reference signals and a plurality of second resources corresponding to a plurality of the second beams for the second reference signals.

US 2015/289147 A1 anticipates a method, an apparatus, a system, and a computer readable medium used to perform beamforming. The method may include a first communication device sending a first plurality of beamforming training frames to a second communication device using a first beamforming weight vector; the first communication device receiving from the second communication device a second beamforming weight vector; and the first communication device sending a second plurality of beamforming training frames to the second communication device using the second beamforming weight vector. The apparatus, method, system, and computer readable media may use spatial diversity with beam switching, spatial diversity with a single beam, weighted multipath beamforming training, single user spatial multiplexing, and beamforming training for beam division multiple access.

### [Summary of Invention]

### [Technical Problem]

However, as the frequency of communication increases, the number of antenna elements provided in the radio station device increases, and a width of the directional beam decreases. In the beam selecting method using the SLS, the SS/PBCH, etc., because the beam is selected by time division and round-robin, the processing time may increase.

An object of the present invention is to reduce the processing time when selecting a beam.

### [Solution to Problem]

An aspect of the present invention is a beam setting method according to claim 1.

An aspect of the present invention is a beam setting device according to claim 2.

An aspect of the present invention is a non-temporal storage medium according to claim 3.

### [Advantageous Effects of Invention]

The number of beams can be set to support both communication using line-of-sight waves and communication using reflected waves.

### [Brief Description of Drawings]

[Fig. 1] Fig. 1 is a diagram showing a configuration example of a first radio station device 11.
[Fig. 2A] Fig. 2A is a diagram showing a beam transmitted by the first radio station device 11.
[Fig. 2B] Fig. 2B is a diagram showing a beam transmitted by the first radio station device 11.
[Fig. 3] Fig. 3 is a flowchart showing a method of beam sweeping performed by the first radio station device 11.
[Fig. 4] Fig. 4 is a schematic diagram of a communication system 9 that selects the beam.

### [Description of Embodiments]

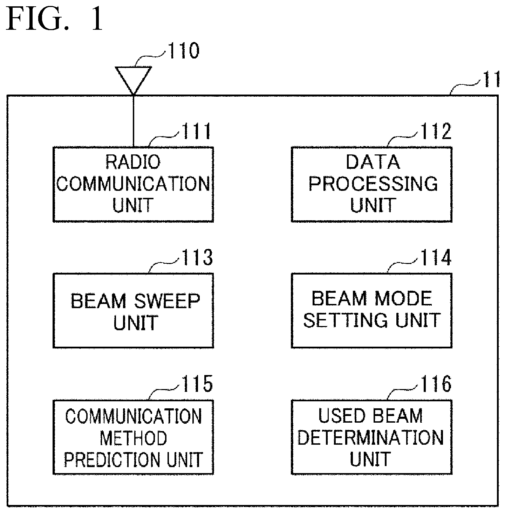

Fig. 1 is a diagram showing a configuration example of a first radio station device 11. The first radio station device 11 includes an antenna 110, a radio communication unit 111, a data processing unit 112, a beam sweep unit 113, a beam mode setting unit 114, a communication method prediction unit 115, and a used beam determination unit 116. The radio communication unit 111 transmits the data that is input from the data processing unit 112 by the antenna 110. The radio communication unit 111 also outputs data received by the antenna 110 to the data processing unit 112.

The data processing unit 112 outputs data that is input from a higher network or its interface (not shown) to the radio communication unit 111. The data processing unit 112 also outputs data that is input from the radio communication unit 111 to the higher network or its interface.

The beam sweep unit 113 controls the radio communication unit 111 to periodically perform the beam sweep. The beam mode setting unit 114 sets the number of beams in the beam sweep performed by the beam sweep unit 113 on the basis of the prediction result from the communication method prediction unit 115.

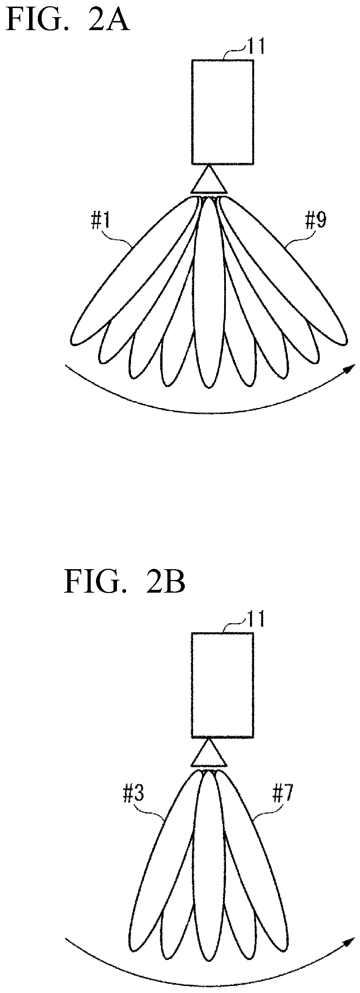

The number of beams when the radio communication unit 111 sweeps the beam is set, in particular, as a first constant or a second constant. The first constant and the second constant are positive integer values, and the first constant is larger than the second constant. Figs. 2A and 2B are diagrams showing beams transmitted by the first radio station device 11. The number of beams that are beam-swept by the first radio station device 11 shown in Fig. 2A is the first constant, for example, nine. The first constant may be the number of all beams that can be obtained by the radio communication unit. The number of beams that are beam-swept by the first radio station device 11 shown in Fig. 2B is the second constant, for example, five. A beam sweep having the number of beams as the first constant is called a first sweep mode, and a beam sweep having the number of beams as the second constant is called a second sweep mode.

In the first sweep mode and the second sweep mode, which beam is swept among beams that the first radio station device 11 can sweep may be changed depending on the position of the second radio station device 12 positioned opposite and the surrounding propagation environment. In Figs. 2A and 2B, although the number of beams in the first sweep mode is 9, and the number of beams in the second sweep mode is 5, the number of beams is not limited thereto.

The beam sweep is performed with nine beams from beams #1 to #9 in the first sweep mode shown in Fig. 2A, whereas the beam sweep is performed with five beams from beams #3 to #7 in the second sweep mode shown in Fig. 2B. In a high-frequency band, the straight advance of radio waves is high, and there is a high possibility of communication using line-of-sight waves. That is, when the beam selected at a certain point of time is #5, the beams to be selected next are highly likely to be the beams #4 and #6 in the vicinity thereof, and the possibility of the beams #1 and #9 being selected is low. Therefore, the beams #1 and #9 are often appropriately selected without performing the beam sweep. Therefore, in the case of communication using line-of-sight waves, the number of beams swept in the second sweep mode is smaller than that in the first sweep mode, and an appropriate beam can be selected with reduced processing time.

On the other hand, the first sweep mode is effective when the first radio station device 11 performs communication by utilizing the reflected wave. For example, in the case where a shielding object exists between the first radio station device 11 and the second radio station device 12, it is considered that the first radio station device 11 uses the beam #1 or 9 to reflect the beam #1 or 9 to a reflector and communicate with the second radio station device 12.

The communication method prediction unit 115 predicts which communication method is used between a communication method using the reflected wave and a communication method using the line-of-sight wave. The communication method prediction unit 115 predicts a method of communication to be performed on the basis of, for example, a line-of-sight of a surrounding environment. The communication method prediction unit 115 predicts a communication method to be performed on the basis of line-of-sight of communication between the first radio station device 11 and a second radio station device 12 which is a communication partner. The communication method prediction unit 115 predicts that communication to be performed is communication by a communication method using a reflected wave when a shielding object is detected, for example, using an RGB-D camera (for a detection method of a shielding object, refer to NPL 3 or the like). The communication method prediction unit 115 predicts that communication to be performed is communication by a communication method using line-of-sight waves, for example, when a direction difference between the beam selected by the beam sweep unit 113 and the beam selected before selecting the beam is equal to or less than a fixed value.

The used beam determination unit 116 determines a beam to be used for communication. The used beam determination unit 116 determines a beam to be used for communication on the basis of the data transmitted by the second radio station device 12. The data transmitted by the second radio station device 12 is, for example, data of the reception intensity of each beam when the first radio station device 11 sweeps the beam. At this time, the used beam determination unit 116 determines a beam having the largest reception intensity as a beam to be used for communication. The data transmitted by the second radio station device 12 may be an ID corresponding to a beam having the largest reception intensity among the respective beams when the first radio station device 11 sweeps the beam. At this time, the used beam determination unit 116 determines a beam corresponding to the ID as a beam to be used for communication.

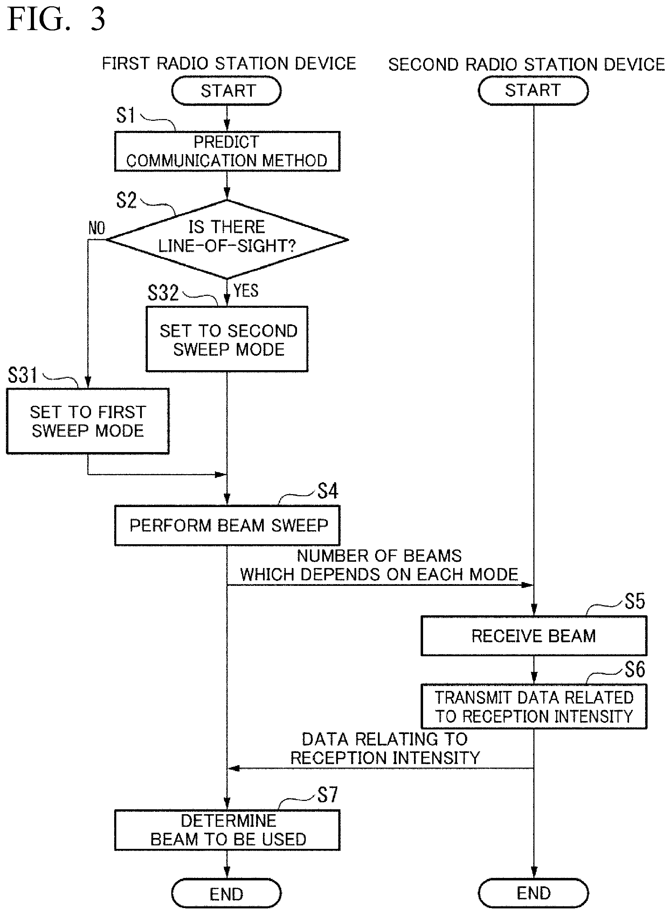

Fig. 3 is a flowchart showing a beam sweep method performed by the first radio station device 11. First, the communication method prediction unit 115 predicts a communication method to be performed (step S1). When there is no line-of-sight (step S2: No), the beam mode setting unit 114 sets a sweep mode to the first sweep mode (step S31). When there is a line-of-sight (step S2: Yes), the beam mode setting unit 114 sets a sweep mode to the second sweep mode (step S32). If the communication method prediction unit 115 determines that there is no line-of-sight when the sweep mode has already been set to the first sweep mode, the beam mode setting unit 114 does not set the sweep mode to the first sweep mode and may maintain the existing setting. When the communication method prediction unit 115 determines that there is a line-of-sight when the sweep mode has already been set to the second sweep mode, the beam mode setting unit 114 does not set the sweep mode to the second sweep mode, and may maintain the existing setting.

Thereafter, the beam sweep unit 113 performs beam sweep according to the set sweep mode (step S4). The second radio station device 12 receives the beam transmitted from the first radio station device 11 (step S5), and transmits data related to reception intensity to the first radio station device 11 (step S6). Thereafter, the used beam determination unit 116 determines a beam to be used for communication on the basis of the data related to the reception intensity (step S7)

According to the above configuration, when the communication method to be performed is predicted to be communication using line-of-sight waves, since there is a high possibility of a beam in the vicinity of a beam being used being selected, the first radio station device 11 performs the beam sweep in the second sweep mode with a small number of beams, and reduces the processing time required for sweep. On the other hand, when the communication method to be performed is predicted to be communication using a reflected wave, since there is a possibility of a beam not included in a beam in the vicinity of a beam being used being selected, the beam sweep is performed in the first sweep mode having a large number of beams, and a beam appropriate for communication is more reliably found. As a result, both transmission efficiency and communication quality can be achieved.

Although embodiments of this invention have been described in detail above with reference to the drawings, specific configurations are not limited to these embodiments, and encompass designs and the like that do not depart from the scope of the invention.

The sweep mode is not limited to two of the first sweep mode and the second sweep mode. For example, three or more sweep modes may be provided, and the number of beams corresponding to the sweep modes may be different for each other. At this time, when the communication method prediction unit 115 predicts that communication is performed by the communication method using line-of-sight waves, the beam mode setting unit 114 changes from a sweep mode under setting to a sweep mode of a beam number which is the next smaller than the beam number corresponding to the sweep mode under setting. When the communication method prediction unit 115 predicts that communication is performed by the communication method using a reflected wave, the beam mode setting unit 114 changes the sweep mode under setting to the sweep mode having the next larger number of beams than the number of beams corresponding to the sweep mode under setting. Thus, the number of beams to be swept can be increased or decreased stepwise.

Although the beam mode setting unit 114 sets the beam mode on the basis of the prediction by the communication method prediction unit 115 when performing the beam sweep, the present invention is not limited thereto. In particular, when the communication method prediction unit 115 predicts that communication is performed by the communication method using line-of-sight waves a predetermined number of times or more by that time, the beam mode setting unit 114 may change the setting from the first sweep mode to the second sweep mode.

A part or all of the first radio station device 11 and the second radio station device 12 in the above-described embodiment may be implemented by a computer. In such a case, a program for realizing this function may be recorded in a computer-readable recording medium, and the program recorded in this recording medium may be read into a computer system, and may be realized by being executed. The "computer system" mentioned here includes an OS and hardware such as peripheral devices. Further, the "computer-readable recording medium" refers to portable media such as a flexible disc, a magneto-optical disc, a ROM, and a CD-ROM, and a storage device such as a hard disk built in a computer system. Furthermore, the "computer-readable recording medium" may also include a medium that dynamically holds a program for a short period of time, such as a communication line when transmitting the program via a network such as Internet or a communication line such as a telephone line, and a medium that holds the program for a certain period of time, such as a volatile memory inside a computer system serving as a server or a client in that case. Further, the program may be for realizing some of the functions described above, may be capable of realizing the functions described above in combination with a program already recorded in a computer system, or may be realized using a programmable logic device such as a field programmable gate array (FPGA).

### [Reference Signs List]

- 11, 91: First radio station device
- 12, 92: Second radio station device
- 110: Antenna
- 111: Radio communication unit
- 112: Data processing unit
- 113: Beam sweep unit
- 114: Beam mode setting unit
- 115: Communication method prediction unit
- 116: Used beam determination unit

## Claims

1. A beam setting method comprising:
a communication method prediction step of predicting a communication method performed on the basis of whether there is a line-of-sight between a first radio station device (91) and a second radio station device (92);
a first beam number setting step of setting the number of beams transmitted by a beam sweep, in which signals using formable beams are sequentially transmitted in a time-division manner, to a first constant when it is predicted that communication is performed by the communication method using the reflected waves more than a predetermined number of times; and
a second beam number setting step of setting the number of beams transmitted by the beam sweep to a second constant smaller than the first constant when it is predicted that communication is performed by the communication method using line-of-sight waves more than a predetermined number of times.

2. A beam setting device comprising:
a communication method prediction unit which predicts a communication method performed on the basis of whether there is a line-of-sight between a first radio station device (91) and a second radio station device (92);
a first beam number setting unit which sets the number of beams transmitted by a beam sweep, in which signals using formable beams are sequentially transmitted in a time-division manner, to a first constant when it is predicted that communication is performed by the communication method using the reflected waves more than a predetermined number of times; and
a second beam number setting unit which sets the number of beams transmitted by the beam sweep to a second constant smaller than the first constant when it is predicted that communication is performed by the communication method using line-of-sight waves more than a predetermined number of times.

3. A non-temporal storage medium storing a program which causes a computer to execute the beam setting method according to claim 1.

## Patentansprüche

1. Strahleinstellverfahren, umfassend:
einen Schritt zum Vorhersagen eines Kommunikationsverfahrens zum Vorhersagen eines Kommunikationsverfahrens, das auf der Grundlage durchgeführt wird, ob eine Sichtlinie zwischen einer ersten Funksendervorrichtung (91) und einer zweiten Funksendervorrichtung (92) besteht;
einen ersten Schritt zum Einstellen der Strahlenanzahl zum Einstellen der Anzahl der Strahlen, die durch einen Strahlendurchlauf übertragen werden, bei dem Signale unter Verwendung formbarer Strahlen sequenziell in einer zeitgeteilten Weise auf eine erste Konstante übertragen werden, wenn vorhergesagt wird, dass die Kommunikation durch das Kommunikationsverfahren unter Verwendung der reflektierten Wellen mehr als eine vorbestimmte Anzahl von Malen durchgeführt wird; und
einen zweiten Schritt zum Einstellen der Strahlenanzahl zum Einstellen der Anzahl der Strahlen, die durch den Strahlendurchlauf auf eine zweite Konstante übertragen werden, die kleiner ist als die erste Konstante, wenn vorausgesagt wird, dass die Kommunikation durch das Kommunikationsverfahren unter Verwendung von Sichtlinienwellen mehr als eine vorbestimmte Anzahl von Malen durchgeführt wird.

2. Strahleinstellvorrichtung, umfassend:
eine Kommunikationsverfahrens-Vorhersageeinheit, die ein Kommunikationsverfahren vorhersagt, das auf der Grundlage dessen durchgeführt wird, ob eine Sichtlinie zwischen einer ersten Funksendervorrichtung (91) und einer zweiten Funksendervorrichtung (92) besteht;
eine erste Strahlanzahl-Einstelleinheit, die die Anzahl der durch den Strahldurchlauf übertragenen Strahlen, bei dem Signale unter Verwendung formbarer Strahlen sequenziell in einer zeitgeteilten Weise übertragen werden, auf eine erste Konstante einstellt, wenn vorhergesagt wird, dass die Kommunikation durch das Kommunikationsverfahren unter Verwendung der reflektierten Wellen mehr als eine vorbestimmte Anzahl von Malen durchgeführt wird; und
eine zweite Strahlanzahl-Einstelleinheit, die die Anzahl der durch den Strahldurchlauf übertragenen Strahlen auf eine zweite Konstante einstellt, die kleiner ist als die erste Konstante, wenn vorhergesagt wird, dass die Kommunikation durch das Kommunikationsverfahren unter Verwendung von Sichtlinienwellen mehr als eine vorbestimmte Anzahl von Malen durchgeführt wird.

3. Nichtflüchtiges Speichermedium, das ein Programm speichert, das einen Computer dazu veranlasst, das Strahleinstellverfahren nach Anspruch 1 auszuführen.

## Revendications

1. Procédé de réglage de faisceaux comportant :
une étape de prédiction de procédé de communication consistant à prédire un procédé de communication réalisé sur la base de la présence ou non d'une ligne de visée entre un premier dispositif de station radio (91) et un deuxième dispositif de station radio (92) ;
une première étape de réglage de nombre de faisceaux consistant à régler le nombre de faisceaux transmis par un balayage de faisceaux, dans lequel des signaux utilisant des faisceaux pouvant être mis en forme sont transmis séquentiellement dans un mode de répartition dans le temps, à une première constante lorsqu'il est prédit qu'une communication est réalisée par le procédé de communication en utilisant plus d'un nombre prédéterminé de fois les ondes réfléchies ; et
une deuxième étape de réglage de nombre de faisceaux consistant à régler le nombre de faisceaux transmis par le balayage de faisceaux à une deuxième constante inférieure à la première constante lorsqu'il est prédit qu'une communication est réalisée par le procédé de communication en utilisant des ondes de ligne de visée plus d'un nombre prédéterminé de fois.

2. Dispositif de réglage de faisceaux comportant :
une unité de prédiction de procédé de communication qui prédit un procédé de communication réalisé sur la base de la présence ou non d'une ligne de visée entre un premier dispositif de station radio (91) et un deuxième dispositif de station radio (92) ;
une première unité de réglage de nombre de faisceaux qui règle le nombre de faisceaux transmis par un balayage de faisceaux, dans lequel des signaux utilisant des faisceaux pouvant être mis en forme sont transmis séquentiellement dans un mode de répartition dans le temps, à une première constante lorsqu'il est prédit qu'une communication est réalisée par le procédé de communication en utilisant plus d'un nombre prédéterminé de fois les ondes réfléchies ; et
une deuxième unité de réglage de nombre de faisceaux qui règle le nombre de faisceaux transmis par le balayage de faisceaux à une deuxième constante inférieure à la première constante lorsqu'il est prédit qu'une communication est réalisée par le procédé de communication en utilisant des ondes de ligne de visée plus d'un nombre prédéterminé de fois.

3. Support de stockage non temporel stockant un programme qui amène un ordinateur à exécuter le procédé de réglage de faisceaux selon la revendication 1.
